# EUROPEAN PATENT SPECIFICATION

(11) **EP 0 529 802 B1**
(45) Date of publication and mention of the grant of the patent: **19.04.2000**
(21) Application number: 92306734.2
(22) Date of filing: 23.07.1992
(51) Int. Cl.: H01M 6/16

(54) **Nonaqueous electrolytes**
Nichtwässrige Elektrolyten
Electrolytes non aqueux

(30) Priority: 13.08.1991 US 744179
(43) Date of publication of application: 03.03.1993
(73) Proprietor: EVEREADY BATTERY COMPANY, INC., St. Louis Missouri 63164 (US)
(72) Inventor: Webber, Andrew, Avon Lake, OH 44012 (US)
(74) Representative: Lord, Hilton David

(56) References cited:
- EP-A- 0 049 082
- FR-A- 2 252 658
- GB-A- 2 087 132
- US-A- 4 284 692

## Description

The present invention relates to an organic electrolyte solution for use in a high energy electrochemical cell comprising a solute dissolved in a mixture of a dioxolane-based solvent and an acyclic ether solvent.

The development of high energy battery systems requires the compatibility of an electrolyte possessing desirable electrochemical properties with highly reactive anode materials, such as lithium and sodium, and the efficient use of high energy density cathode materials, such as FeS₂. The use of aqueous electrolytes is precluded in these systems, as the anode materials are sufficiently active to react with water chemically.

It has, therefore, been necessary, in order to realise the high energy density obtainable through use of these highly reactive anodes and high energy density cathodes, to turn to the investigation of nonaqueous electrolyte systems and, more particularly, to nonaqueous organic electrolyte systems.

The term "nonaqueous organic electrolyte", in the prior art, refers to an electrolyte which is composed of a solute, for example, a salt of a complex salt of Group I-A, Group II-A or Group III-A elements of the Periodic Table, dissolved in an appropriate nonaqueous organic solvent. Conventional nonaqueous solvents include propylene carbonate, 1,2-dimethoxyethane, tetrahydrofuran, ethylene carbonate, 3-methyl-2-oxazolidone and 3,5-dimethylisoxazole.

A multitude of solutes is known and recommended for use in such systems, but the selection of a suitable solvent has been particularly troublesome, since many of those solvents which are used in the preparation of electrolytes sufficiently conductive to permit effective ion migration through the solution are reactive with the highly reactive anodes described above.

Most investigators in this area, in search of suitable solvents, have concentrated on aliphatic and aromatic nitrogen- and oxygen-containing compounds. The results of this search have not been entirely satisfactory, as many of the solvents investigated still could not be used effectively with extremely high energy density cathode materials, and were sufficiently corrosive to lithium anodes to prevent efficient performance over any length of time.

US-A-4,071,665 discloses high energy density galvanic batteries having high utilisation of active electrode materials such as lithium anodes, cathode depolarisers reducible by the anodes, such as cupric sulphide, and electrolytes comprising a dioxolane as solvent and up to about 20 weight percent of a conductive non-reactive electrolyte salt, such as lithium perchlorate, dissolved therein. Optionally, up to 50 weight percent of the solvent can be a second solvent which is an aliphatic or cycloaliphatic carbohydric ether to reduce battery gassing. Additional small amounts of a tertiary nitrogen base can be added to suppress the tendency of the electrolyte system to polymerise.

US-A-4,952,330 discloses a nonaqueous electrolyte for cells, such as Li/FeS₂ cells, comprising a solute, such as LiCF₃SO₃, dissolved in a mixture of a major amount of dioxolane (e.g. 40-53 volume percent), a minor amount of propylene carbonate (e.g. 8-18 volume percent) and dimethoxyethane (e.g. 32-45 volume percent). The dioxolane to dimethoxyethane weight ratio for these solutions covers the range of 67 : 33 to 52 : 48.

JP-A-59/173961 discloses organic electrolytes for secondary cells in which the mole ratio of the dioxolane to dimethoxyethane is 2 : 1, corresponding to a weight ratio of 62 : 38.

US-A-3,996,069 discloses a nonaqueous cell utilising a highly active metal anode, such as lithium, a solid cathode selected from the group consisting of FeS₂, Co₃O₄, V₂O₅, Pb₃O₄, In₂S₃ and CoS₂, and a liquid organic electrolyte consisting essentially of 3-methyl-2-oxazolidone in combination with a low viscosity co-solvent, such as dioxolane, and a metal salt selected, for example, from MSCN, MCF₃SO₃, MBF₄, MClO₄ and MM'F₆ wherein M' is lithium, sodium or potassium and M is phosphorus, arsenic or antimony.

GB-A-2087132 discloses a rechargeable lithium electrochemical cell including an electrolyte solution comprising a solute such as LiAsF₆ dissolved in a solvent mixture of diethyl ether and a co-solvent such as dioxolane, tetrahydrofuran or dimethoxyethane. The amount of co-solvent is selected to produce an increase in conductivity outweighing any decrease in cycling efficiency.

FR-A-2252658 discloses electrolytes for Li/V₂O₅ galvanic batteries comprising a solute such as LiClO₄ dissolved in a solvent mixture. Solvent mixtures of dioxolane, tetrahydrofuran and bis-(2-methoxy)-ethoxyethyl ether are disclosed. The electrolyte is said to provide good conductivity at moderate temperatures and resistance to gassing at elevated temperatures.

US-A-4284692 discloses a Li/TiS₂ cell having an electrolyte containing a lithium salt solute dissolved in a cyclic ether solvent such as dioxolane, optionally with dimethoxyethane, in which the cyclic ether solvent is stabilized against polymerisation by the addition of an inhibitor. It is stated that the solvent can be dioxolane mixed with dimethoxyethane in a weight ratio range of from 100:0 to 40:60.

While the theoretical energy, i.e. the electrical energy potentially available from a selected anode-cathode couple, is relatively easy to calculate, there is a need to choose a nonaqueous electrolyte for such a couple that permits the actual energy produced for an assembled battery to approach the theoretical energy. The problem usually encountered is that it is practically impossible to predict in advance how well, if at all, a nonaqueous electrolyte will function with a selected couple.

Thus, a cell must be considered as a unit having three parts - a cathode, an anode and an electrolyte and it is to be understood that the parts of one cell are not predictably interchangeable with parts of another cell to produce an efficient and workable cell.

Many cell systems can function in various environments when they are freshly produced. However, when cell systems are stored for long periods of time at high temperatures, their impedance characteristics can deteriorate, thereby rendering the cell systems unsuitable for consumer applications. Exposing many cell systems to elevated temperatures of 60°C for prolonged periods of time can result in venting of the cell, thereby causing the cell to be unsuitable for many consumer applications.

We have now surprisingly found that, by reducing the amount of the dioxolane-based constituent of the solvent and increasing the amount of the ether-based constituent, electrochemical cells having enhanced qualities can be produced.

Thus, in a first aspect, the present invention provides an organic electrolyte solution for use in a high energy electrochemical cell comprising a solute dissolved in a mixture of a dioxolane-based solvent and an acyclic ether solvent, characterised in that the weight ratio of the dioxolane-based solvent to the acyclic ether solvent is from 1 : 99 to less than 40 : 60, preferably from 10 : 90 to less than 40 : 60, and the volume ratio of the dioxolane-based solvent to the acyclic ether solvent is preferably less than 40 : 60 and the acyclic ether is selected from dimethoxyethane, ethyl glyme, diglyme and triglyme and wherein optionally at least one co-solvent is included in an amount less than 20 wt % based on the weight of the solvent of the electrolyte solution.

Alternatively, the present invention provides an organic electrolyte solution for use in an electrochemical cell comprising a solute dissolved in a mixture of a dioxolane-based solvent and an acyclic ether solvent in which the weight ratio of the dioxolane-based solvent to the acyclic ether solvent is from 1 : 99 to less than 40 : 60 and wherein the volume ratio of the dioxolane-based solvent to the acyclic ether solvent is less than 40 : 60, and the acyclic ether is selected from dimethoxyethane, ethyl glyme, diglyme and triglyme, and wherein optionally at least one co-solvent is included in an amount less than 20 wt % based on the weight of the solvent of the electrolyte solution..

The dioxolane-based solvent is advantageously dioxolane.

The acyclic ether is preferably 1,2-dimethoxyethane.

The organic electrolyte solutions according to the present invention may usefully further comprise at least one co-solvent, in an amount less than 20 wt % based on the weight of the solvent of the electrolyte solution. The co-solvent is advantageously selected from 3,5-dimethylisoxazole, 3-methyl-2-oxazolidone, propylene carbonate, ethylene carbonate, butylene carbonate and sulpholane, but is preferably 3,5-dimethylisoxazole.

In a preferred embodiment, there is provided an organic electrolyte solution as defined, and wherein the dioxolane-based solvent is dioxolane, the acyclic ether solvent is 1,2-dimethoxyethane and wherein the weight ratio of the dioxolane to the 1,2-dimethoxyethane is from 10 : 90 to less than 40 : 60, and further comprising a co-solvent as defined, in an amount less than 20 wt % based on the weight of the solvent of the electrolyte solution, and selected from 3,5-dimethylisoxazole, 3-methyl-2-oxazolidone, propylene carbonate, ethylene carbonate, butylene carbonate and sulpholane, but is preferably 3,5-dimethylisoxazole. More preferably, the co-solvent is 3,5-dimethylisoxazole or 3-methyl-2-oxazolidone.

The solute is advantageously selected from lithium trifluoromethane sulphonate, lithium bistrifluoromethylsulphonyl imide, lithium perchlorate, lithium hexafluoroarsenate, and mixtures thereof, especially lithium trifluoromethane sulphonate.

The present invention further provides an electrochemical cell comprising an anode, a cathode and an organic electrolyte solution of the invention. Such cells, especially high energy cells, are well known in the art, and may be constructed in any suitable manner.

In such cells, the anode is preferably lithium and the cathode is selected from fluorinated carbon, a metal sulphide, a metal oxide, a metal chloride and mixtures thereof, but especially FeS₂.

The electrolyte solutions of the present invention can be used in an electrochemical cell and stored at high temperatures for extended periods of time without allowing cell impedance to increase to levels which substantially reduce cell performance.

Another advantage of the present invention is that the electrolyte solutions can be employed with an electrochemical cell employing a lithium anode and a cathode such as FeS₂.

The electrolyte solutions of the present invention are particularly suited to cells employing a lithium anode and an iron sulphide-containing cathode.

Typically, the dioxolane-based solvent will be dioxolane, alkyl-substituted dioxolanes or mixtures thereof. Examples of alkyl-substituted dioxolanes are 4-methyl-1,3-dioxolane and 2,2-dimethyl-1,3-dioxolane. The preferred dioxolane-based solvent for use in the present invention is dioxolane. The preferred acyclic ether for use in the present invention is 1,2-dimethoxyethane.

For some applications, at least one optional co-solvent may be used, such as one or more of 3,5-dimethylisoxazole, 3-methyl-2-oxazolidone, propylene carbonate, ethylene carbonate, butylene carbonate, sulpholane, tetrahydrofuran, diethyl carbonate, ethylene glycol sulphite, dioxane and dimethyl sulphate. The preferred co-solvents for use in the present invention are 3,5-dimethylisoxazole, 3-methyl-2-oxazolidone and propylene carbonate.

Addition of the optional co-solvent should be limited to 20 weight percent, or less, based on the total weight of the solvent for the electrolyte.

It is believed that the low weight ratio of dioxolane-based solvent to the acyclic ether solvent results in a better impedance maintenance of the cells and better performance on high-rate photoflash tests. The present invention is not bound by this theory, however.

It has been observed that the low weight ratio of dioxolane-based solvent to the acyclic ether solvent in the electrolyte solution of the present invention provides good cell impedance, particularly at low frequencies (e.g. 1O Hz) after the cell is stored at 60°C. This is believed to be due to a much better charge transfer resistance than equivalent cells using a higher weight ratio. It is also believed that a low weight ratio of dioxolane-based solvent to the acyclic ether renders the electrolyte solution less sensitive to the effects of polymerisation, which may explain the better impedance maintenance observed in these cells.

The preferred weight ratio of the dioxolane-based solvent to the acyclic ether solvent is from 10 : 90 to less than 40 : 60 and the most preferred is 29 : 71. The most preferred electrolyte solution is 29.0 weight percent dioxolane, 70.8 weight percent 1,2-dimethoxyethane and 0.2 weight percent 3,5-dimethylisoxazole, along with 1.0 mole LiCF₃SO₃ per litre of solvent.

Highly active metal anodes suitable for the present invention include lithium, sodium, potassium, calcium, magnesium and their alloys, and metal-intercalated carbon or graphite material, such as lithiated carbon. Of these active metals, lithium is preferred because, in addition to being a ductile, soft metal that can easily be assembled in a cell, it possesses the highest energy-to-weight ratio of the group of suitable anode metals.

Suitable solid cathodes for use in the present invention include: fluorinated carbon, which can be represented by the formula (CFₓ)ₙ wherein x varies between about 0.5 and about 1.2 and (C₂F)ₙ wherein, in both cathodes, n refers to the number of monomer units (which number, it will be appreciated, can vary widely); copper sulphide (CuS); copper oxide (CuO); lead dioxide (PbO₂); iron sulphides (FeS, FeS₂); copper chloride (CuCl₂); silver chloride (AgCl); sulphur; bismuth trioxide (Bi₂O₃); copper bismuth oxide (CuBi₂O₄); cobalt oxides; vanadium pentoxide (V₂O₅); tungsten trioxide (WO₃); molybdenum trioxide (MoO₃); molybdenum disulphide (MoS₂); titanium disulphide (TiS₂); and transition metal polysulphides.

The preferred cathodes for use in the present invention are the iron sulphides alone and in combination with other cathode materials such as:
FeS₂ + CuO;
FeS₂ + Bi₂O₃;
FeS₂ + Pb₂Bi₂O₅;
FeS₂ + Pb₃O₄;
FeS₂ + CuO + Bi₂O₃;
FeS₂ + CuO + Pb₃O₄;
FeS₂ + CuO + CoS₂;
FeS₂ + MnO₂; and
FeS₂ + CoS₂.

The ionisable solute for use in the present invention may be a simple salt, such as LiCF₃SO₃ or lithium bistrifluoromethylsulphonyl imide (Li(CF₃SO₂)₂N), for example, or a double salt or mixtures thereof which will produce an ionically conductive solution when dissolved in the solvent. Suitable solutes are complexes of inorganic or organic Lewis acids and inorganic ionisable salts.

One of the requirements for utility is that the salts, whether simple or complex, be compatible with the solvent(s) being employed and that they yield a solution which is sufficiently ionically conductive, generally at least about 10⁻⁴ohm⁻¹cm⁻¹. Generally, a concentration of at least about 0.5 M would be sufficient for most cell applications.

Typical suitable Lewis acids include aluminium fluoride, aluminium bromide, aluminium chloride, antimony pentachloride, zirconium tetrachloride, phosphorus pentachloride, phosphorus pentafluoride, boron fluoride, boron chloride, boron bromide and arsenic pentafluoride.

Ionisable salts useful in combination with the Lewis acids include lithium fluoride, lithium chloride, lithium bromide, lithium sulphide, sodium fluoride, sodium chloride, sodium bromide, potassium fluoride, potassium chloride and potassium bromide.

The ionisable solute for use in conjunction with an iron sulphide-containing cathode would suitably be lithium trifluoromethane sulphonate (LiCF₃SO₃), lithium bistrifluoromethylsulphonyl imide (Li(CF₃SO₂)₂N), lithium perchlorate (LiClO₄), lithium hexafluoroarsenate (LiAsF₆) or mixtures thereof, lithium trifluoromethane sulphonate being the most preferred. Suitable double salts for various cell applications include lithium tetrafluoroborate (LiBF₄), lithium hexafluorophosphate (LiPF₆) and potassium hexafluoroarsenate (KAsF₆).

### EXAMPLE

Several cells were produced, each containing an anode of 0.95 g of lithium; a cathode of 4.1 g of a mix containing 91 wt % FeS₂, 2.25 wt % acetylene black, 4.75 wt % graphite and 2 wt % metallic zinc; and 2 g of an electrolyte as shown in Table 1.

**TABLE 1**

| ELECTROLYTE SOLUTION | | | | | |
|---|---|---|---|---|---|
| LOT NO. | DIOX (wt/%) | DME (wt/%) | 3Me2Ox (wt/%) | DMI (wt/%) | LiCF₃SO₃ (Moles /litre of solvent) |
| A | 29.0 | 70.8 | 0 | 0.2 | 1.5 |
| B* | 55.0 | 44.8 | 0 | 0.2 | 1.5 |
| C* | 78.5 | 21.3 | 0 | 0.2 | 1.5 |
| D | 25.4 | 61.9 | 12.5 | 0.2 | 1.0 |
| E* | 69.6 | 18.9 | 11.4 | 0.2 | 1.0 |

In the above Table, DIOX is dioxolane, DME is 1,2-dimethoxyethane, DMI is 3,5-dimethylisoxazole, 3Me2Ox is 3-methyl-2-oxazolidone, and * indicates a comparative Lot.

Samples of the cells (5 cells per lot) were stored for 12 weeks at 60°C. After storage the cells were checked for 1 kHz impedance, open circuit voltage (OCV), closed circuit voltage (CCV; 0.5 second on 3.9-ohm load) and flash amperage. The flash amperage test consisted of a 200-millisecond closed circuit voltage on a 0.01-ohm load. Furthermore, two simulated photoflash tests per lot were carried out. Each test involved measuring the recycle time of a pair of cells in a Pentax PC303 35 mm camera with a built-in flash unit. The recycle time is the time for the "ready light" to come back on after the first flash. This time should be as short as possible.

The data obtained are shown in Table 2.

**TABLE 2**

| Lot No. | 1 kHz Impedance Ω | OCV (V) | CCV (V) | Flash Amperage (A) | Average Recycle Time (s) |
|---|---|---|---|---|---|
| A | 0.48 | 1.84 | 1.60 | 4.26 | 6.6 |
| B | 0.59 | 1.84 | 1.54 | 2.79 | 8.6 |
| C | 0.77 | 1.83 | 1.45 | 2.45 | 8.6 |
| D | 0.59 | 1.83 | 1.37 | 3.92 | 7.8 |
| E | 0.57 | 1.84 | 1.41 | 3.89 | 10.1 |

The data show an unexpected advantage for low dioxolane : 1,2-dimethoxyethane weight ratio electrolytes (Samples A and D). Specifically, Lot A gave much better cell impedance, closed circuit voltage, flash amperage and recycle times than Lot B or Lot C after 60°C storage. Lot D also gave much better recycle times than Lot E after 60°C storage.

Cells containing no dioxolane (i.e., only 1,2-dimethoxyethane and 0.2% 3,5-dimethylisoxazole) vent during 60°C storage, thereby demonstrating the need for the dioxolane-based constituent.

## Claims

1. An organic electrolyte solution for use in a high energy electrochemical cell comprising a solute dissolved in a mixture of a dioxolane-based solvent and an acyclic ether solvent, characterised in that the weight ratio of the dioxolane-based solvent to the acyclic ether solvent is from 1 : 99 to less than 40 : 60, the volume ratio of the dioxolane-based solvent to the acyclic ether solvent is preferably less than 40 : 60, and the acyclic ether is selected from dimethoxyethane, ethyl glyme, diglyme and triglyme, and wherein optionally at least one co-solvent is included in an amount less than 20 wt % based on the weight of the solvent of the electrolyte solution.

2. A solution according to claim 1, wherein the weight ratio of the dioxolane-based solvent to acyclic ether solvent is from 10 : 90 to less than 40 : 60, preferably 29 : 71.

3. A solution according to claim 1 or 2, wherein the dioxolane-based solvent is dioxolane.

4. A solution according to any preceding claim, wherein the acyclic ether is 1,2-dimethoxyethane.

5. A solution according to any preceding claim, wherein at least one co-solvent is included in the electrolyte solution.

6. A solution according to claim 5, wherein the co-solvent is selected from 3,5-dimethylisoxazole, 3-methyl-2-oxazolidone, propylene carbonate, ethylene carbonate, butylene carbonate and/or sulpholane, preferably 3,5-dimethylisoxazole.

7. A solution according to any preceding claim, comprising 29.0 weight percent dioxolane, 70.8 weight percent 1,2-dimethoxyethane and 0.2 weight percent 3,5-dimethylisoxazole, along with 1.0 mole LiCF₃SO₃ per litre of solvent.

8. A solution according to any preceding claim, wherein the solute is selected from lithium trifluoromethane sulphonate, lithium bistrifluoromethylsulphonyl imide, lithium perchlorate, lithium hexafluoroarsenate, and mixtures thereof, preferably lithium trifluoromethane sulphonate.

9. An, preferably high energy, electrochemical cell comprising an anode, a cathode and an organic electrolyte solution according to any preceding claim.

10. An electrochemical cell according to claim 9, wherein the anode is lithium and the cathode is selected from fluorinated carbon, a metal sulphide, a metal oxide, a metal chloride and mixtures thereof, preferably FeS₂.

## Patentansprüche

1. Organische Elektrolytlösung zum Einsatz in einer elektrochemischen Hochleistungszelle, die einen gelösten Stoff enthält, der in einer Mischung aus einem auf Dioxolan basierenden Lösungsmittel und einem azyklischen Etherlösungsmittel aufgelöst ist, dadurch gekennzeichnet, dass das Gewichtsverhältnis des auf Dioxolan basierenden Lösungsmittels zu dem azyklischen Etherlösungsmittel von 1:99 bis zu weniger als 40:60 reicht, das Volumenverhältnis des auf Dioxolan basierenden Lösungsmittels zu dem azyklischen Etherlösungsmittel vorzugsweise weniger als 40:60 beträgt, und der azyklische Ether ausgewählt wird unter Dimethoxyethan, Ethylglym, Diglym und Triglym, und in dem wahlweise wenigstens ein Co-Lösungsmittel in einer Menge von weniger als 20 Gew.%, basierend auf dem Gewicht des Lösungsmittels der Elektrolytlösung, inbegriffen ist.

2. Lösung gemäß Anspruch 1, in welcher das Gewichtsverhältnis des auf Dioxolan basierenden Lösungsmittels zu dem azyklischen Etherlösungsmittel von 10:90 bis zu weniger als 40:60, vorzugsweise 29:71, reicht.

3. Lösung gemäß den Ansprüchen 1 oder 2, in welcher das auf Dioxolan basierende Lösungsmittel Dioxolan ist.

4. Lösung gemäß irgendeinem der vorhergehenden Ansprüche, in welcher der azyklische Ether das 1,2-Dimethoxyethan ist.

5. Lösung gemäß irgendeinem der vorhergehenden Ansprüche, in welcher mindestens ein Co-Lösungsmittel in der Elektrolytlösung inbegriffen ist.

6. Lösung gemäß Anspruch 5, in welcher das Co-Lösungsmittel ausgewählt wird unter 3,5-Dimethylisooxazol, 3-Methyl-2-oxazolidon, Propylenkarbonat, Ethylenkarbonat, Butylenkarbonat und/oder Sulfolan, vorzugsweise aber 3,5-Dimethylisooxazol ist.

7. Lösung gemäß irgendeinem der vorhergehenden Ansprüche, die 29,0 Gewichtsprozente Dioxolan, 70,8 Gewichtsprozente 1,2-Dimethoxyethan und 0,2 Gewichtsprozente 3,5-Dimethylisoxazol zusammen mit 1,0 Mol LiCF₃SO₃ pro Liter Lösungsmittel enthält.

8. Lösung gemäß irgendeinem der vorhergehenden Ansprüche, in welcher der gelöste Stoff ausgewählt wird unter Lithiumtrifluormethansulfonat, Lithiumbistrifluormethylsulfonylimid, Lithiumperchlorat, Lithiumhexafluorarsenat und Mischungen derselben, vorzugsweise aber Lithiumtrifluormethansulfonat ist.

9. Eine elektrochemische Zelle, vorzugsweise eine Hochleistungszelle, die eine Anode, eine Kathode und eine organische Elektrolytlösung gemäß irgendeinem der vorhergehenden Ansprüche enthält.

10. Elektrochemische Zelle gemäß Anspruch 9, in welcher die Anode Lithium ist, und die Kathode ausgewählt wird unter fluoriertem Kohlenstoff, einem Metallsulfid, einem Metalloxid, einem Metallchlorid und Mischung davon, vorzugsweise aber FeS₂ ist.

## Revendications

1. Solution organique d'électrolyte utilisable dans une pile électrochimique à haute énergie comprenant un soluté dissous dans un mélange d'un solvant à base de dioxolane et d'un solvant d'éther acyclique, caractérisée en ce que le rapport de poids du solvant à base de dioxolane sur le solvant d'éther acyclique est de 1:99 à moins de 40:60, le rapport volumique du solvant à base de dioxolane sur le solvant d'éther acyclique est de préférence inférieur à 40:60 et l'éther acyclique est choisi à partir du diméthoxyéthane, de l'éthylglyme, de la diglyme et de la triglyme, et dans laquelle éventuellement au moins un co-solvant est inclus dans une quantité inférieure à 20% en poids sur la base du poids du solvant de la solution d'électrolyte.

2. Solution suivant la revendication 1, dans laquelle le rapport de poids du solvant à base de dioxolane sur le solvant d'éther acyclique est de 10:90 à moins de 40:60, de préférence de 29:71.

3. Solution suivant la revendication 1 ou 2, dans laquelle le solvant à base de dioxolane est du dioxolane.

4. Solution suivant l'une quelconque des revendications précédentes, dans laquelle l'éther acyclique est le 1,2-diméthoxyéthane.

5. Solution suivant l'une quelconque des revendications précédentes, dans laquelle au moins un co-solvant est inclus dans la solution d'électrolyte.

6. Solution suivant la revendication 5, dans laquelle le co-solvant est choisi à partir du 3,5-diméthylisoxazole, de la 3-méthyl-2-oxazolidone, du carbonate de propylène, du carbonate d'éthylène, du carbonate de butylène et/ou du sulfolane, de préférence le 3,5-diméthylisoxazole.

7. Solution suivant l'une quelconque des revendications précédentes. comprenant 29,0 pour-cent en poids de dioxolane, 70,8 pour-cent en poids de 1,2-diméthoxyéthane et 0,2 pour-cent en poids de 3,5-diméthylisoxazole, accompagnés de 1,0 mole de LiCF₃SO₃ par litre de solvant.

8. Solution suivant l'une quelconque des revendications précédentes, dans laquelle le soluté est choisi à partir du sulfonate de trifluorométhane de lithium, du bistrifluorométhylsulfonylimide de lithium, du perchlorate de lithium, de l'hexafluoroarsénate de lithium et de mélanges de ceux-ci, de préférence le sulfonate de trifluorométhane de lithium.

9. Pile électrochimique, de préférence à haute énergie, comprenant une anode, une cathode et une solution organique d'électrolyte suivant l'une quelconque des revendications précédentes.

10. Pile électrochimique suivant la revendication 9, dans laquelle l'anode est du lithium et la cathode est choisie à partir d'un carbone fluoré, d'un sulfure métallique, d'un oxyde métallique, d'un chlorure métallique et de mélanges de ceux-ci, de préférence FeS₂.
